# EUROPÄISCHE PATENTSCHRIFT

(11) **EP 0 988 244 B1**
(45) Veröffentlichungstag und Bekanntmachung des Hinweises auf die Patenterteilung: **16.04.2003**
(21) Anmeldenummer: 98929290.9
(22) Anmeldetag: 08.05.1998
(51) Int. Cl.: B65G 65/44, B65D 88/66

(54) **VORRICHTUNG FÜR DEN MATERIALAUSTRAG AUS EINEM SILO**
DEVICE FOR DISCHARGING MATERIAL FROM A SILO
DISPOSITIF POUR EXTRAIRE DES MATERIAUX D'UN SILO

(30) Priorität: 04.06.1997 DE 19723357
(43) Veröffentlichungstag der Anmeldung: 29.03.2000
(73) Patentinhaber: PUTZMEISTER Aktiengesellschaft, 72631 Aichtal (DE)
(72) Erfinder: ZEY, Wolfgang, D-72800 Eningen (DE)
(74) Vertreter: Wolf, Eckhard, Dr.-Ing.
(86) Internationale Anmeldenummer: EP9802711
(87) Internationale Veröffentlichungsnummer: WO98055382

(56) Entgegenhaltungen:
- DE-A- 3 906 253
- DE-U- 9 403 005
- US-A- 3 039 598

## Beschreibung

Die Erfindung betrifft eine Vorrichtung für den Materialaustrag aus einem Silo mit einer sich mittig über den Siloboden erstreckenden langgestreckten Austragöffnung oder -rinne und mit einem auf dem Siloboden über der Austragöffnung oder -rinne quer zu deren Längserstreckung mittels mindestens eines radial ausgerichteten Hydrozylinders hin- und herverschiebbaren Schubrahmen, wobei der Hydrozylinder mit der Stirnfläche seiner über eine radial nach innen weisende Gehäuseöffnung überstehenden Kolbenstange an einem am Schubrahmen angeordneten Mitnehmerlager angeschlossen ist.

Bei Silos für Dickstoffe und für nicht fließfähiges Schüttgut ist eine zusätzliche Austraghilfe erforderlich, die die Gestalt eines hydraulisch angetriebenen Schubrahmens aufweisen kann. Der Schubrahmen erfaßt beim Hin- und Herverschieben mit seinen Rahmenholmen und -streben das bodennah im Silo befindliche Material und verschiebt dieses gezielt in Richtung Austragöffnung oder -rinne. In der Austragrinne kann ein Austragförderer beispielsweise in Form eines Schneckenförderers angeordnet werden, der das ankommende Material nach außen fördert. Bei einem bekannten Silo dieser Art (DE-U 9403005, DE-A 3906253) wird der Schubrahmen mit einem Hydrozylinder angetrieben, der im bodennahen Bereich über den Silomantel nach außen übersteht und mit seiner Kolbenstange durch eine Öffnung im Silomantel hindurch mit dem Schubrahmen verbunden ist. Bei dieser Bauweise werden Kolbenstangen mit relativ langer Knicklänge benötigt, die innerhalb des Silobehälters einem hohen Verschleiß ausgesetzt sind. Hinzu kommt, daß der Schubrahmenantrieb eine Ölhydraulik umfaßt, die im Falle einer Leckage zu einer nicht akzeptablen Verschmutzungsgefahr führt.

Ausgehend hiervon liegt der Erfindung die Aufgabe zugrunde, eine Materialauftragsvorrichtung der eingangs angegebenen Art zu entwickeln, die eine günstigere Krafteinleitung und verbesserte Standzeiten aufweist.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Die erfindungsgemäße Lösung geht vor allem von dem Gedanken aus, daß bei einer Anordnung der den Schubrahmen antreibenden Hydrozylinder im Inneren des Silos eine Verkürzung der Kolbenstangen, eine Verbesserung der Krafteinleitung und eine verbesserte Führung des Schubrahmens erzielt werden kann. Um dies zu erreichen, wird gemäß der Erfindung vorgeschlagen, daß der mindestens eine Hydrozylinder im Inneren des Silos in einem mit dem Siloboden verbundenen Zylindergehäuse angeordnet ist.

Gemäß einer bevorzugten Ausgestaltung der Erfindung sind zwei im Inneren des Silos einander diametral gegenüberliegende, radial ausgerichtete, im Gegentakt ansteuerbare Hydrozylinder vorgesehen, die in je einem mit dem Siloboden verbundenen Zylindergehäuse angeordnet sind und die mit den einander zugewandten Stirnflächen ihrer über je eine radial nach innen weisende Gehäuseöffnung überstehenden Kolbenstangen oder Plunger von einander entgegengesetzten Seiten her gegen ein mittig am Schubrahmen angeordnetes Mitnehmerlager radial anliegen. Mit diesen Maßnahmen erhält man eine optimale Krafteinleitung im mittleren Bereich des Schubrahmens und eine wesentliche Verkürzung der Kolbenstangen. Weiter können die beiden Zylindergehäuse an ihrer Außenfläche eine Schubführung für den Schubrahmen bilden, so daß eine verkantungsfreie und verschleißarme Führung des Schubrahmens gewährleistet ist.

In der Austragrinne befindet sich zweckmäßig ein vorzugsweise als Schneckenförderer ausgebildeter Austragförderer, über den das ankommende Material in eine mittige oder äußere Auslaßöffnung nach außen transportiert werden kann.

Um trotz der Anordnung der Hydrozylinder im Siloinnenraum eine hohe Wartungsfreundlichkeit zu ermöglichen, wird gemäß einer vorteilhaften Ausgestaltung der Erfindung vorgeschlagen, daß die Zylindergehäuse jeweils bis zum äußeren Rand des Silobodens reichen und vom Siloäußeren her über eine verschließbare Radialöffnung zugänglich sind. Eine weitere Verbesserung in dieser Hinsicht kann erreicht werden, wenn die Zylindergehäuse zu einer im Siloboden angeordneten, Montageöffnung hin offen sind. Dies ermöglicht einen Zugriff zu den Hydrozylindern von der Unterseite des Silobodens her. Die Zylindergehäuse erstrecken sich ausgehend vom Bodenrand aus zweckmäßig über jeweils ein Viertel des Bodendurchmessers, wobei auf der Innenseite des Gehäuses noch eine Führungsbüchse für den Plunger oder die Kolbenstange vorgesehen werden kann. Die Führungsbüchse kann zusätzlich mit Spülkanälen versehen werden, über die die Kolbenstange oder der Plunger mit Spülwasser gereinigt werden kann.

Der Siloboden weist zweckmäßig einen kreisrunden Umriß auf, während der Schubrahmen aus zwei zueinander spiegelbildlich angeordneten, teilkreisförmigen Rahmensegmenten zusammengesetzt ist, die an ihren einander zugewandten, miteinander verbundenen Enden einen stumpfen Winkel einschließen können. Der Schubrahmen weist zweckmäßig Rahmenholme und/oder Rahmenstreben auf, die an ihren vom Siloboden abgewandten Seite ein dachförmiges Profil aufweisen, auf welches, das Material beim Verschieben des Schubrahmens leicht auflaufen kann. Gemäß einer weiteren bevorzugten Ausgestaltung der Erfindung weist der Schubrahmen zwei im Abstand voneinander angeordnete, in Verschieberichtung des Schubrahmens ausgerichtete, gegen die Schubführung auf den Gehäuseaußenseiten gleitend anliegende Traversen auf, die einen in Verschieberichtung langgestreckten, nach oben und unten offenen Führungsrahmen innerhalb des Schubrahmens begrenzen. Das Mitnehmerlager erstreckt sich dabei zweckmäßig im mittleren Bereich des Schubrahmens zwischen den beiden Traversen, die in der Nähe ihrer Enden auf ihrer dem Siloboden abgewandten Seite durch je einen Bügel miteinander verbunden sind. Aufgrund der erfindungsgemäßen Anordnung der Hydrozylinder im Inneren des Silos ist es möglich, die Hydrozylinder als Plungerzylinder auszubilden, deren Plunger mit ihren freien Stirnflächen gegen das Mitnehmerlager anliegen. Die Kolbenstangen oder Plunger können an ihren Stirnflächen als konvexe Kugel- oder Zylinderkalotten ausgebildet sein, während das Mitnehmerlager je eine den Kugel- oder Zylinderkalotten entsprechende konkave Anlagefläche aufweist. Diese Anordnung ermöglicht eine formschlüssige Einspannung des Rahmens zwischen den Kolbenstangen; zusätzliche Schraubkupplungen und mechanische Verbindungen entfallen.

Um im Leckagefalle die Gefahr einer Verschmutzung mit Hydrauliköl zu vermeiden, wird gemäß einer vorteilhaften Ausgestaltung der Erfindung vorgeschlagen, daß die hydraulischen Antriebsmittel für den Schubrahmen mit Wasser als hydraulischem Druckmittel beaufschlagt werden.

Im folgenden wird die Erfindung anhand eines in der Zeichnung in schematischer Weise dargestellten Ausführungsbeispiels näher erläutert. Es zeigen
- Fig. 1: eine Siloanlage mit Schubrahmen in teilweise aufgebrochener perspektivischer Darstellung;

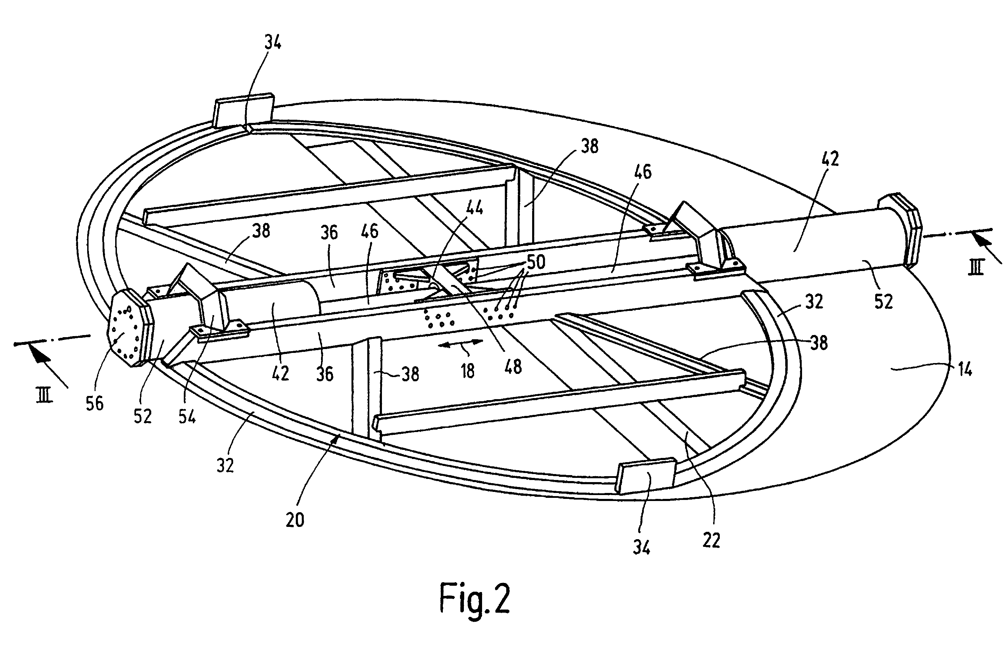

- Fig. 2: eine schaubildliche Darstellung des Silobodens mit Schubrahmen und Schubrahmenantrieb;
- Fig. 3: einen Schnitt entlang der Schnittlinie III-III der Fig. 2;

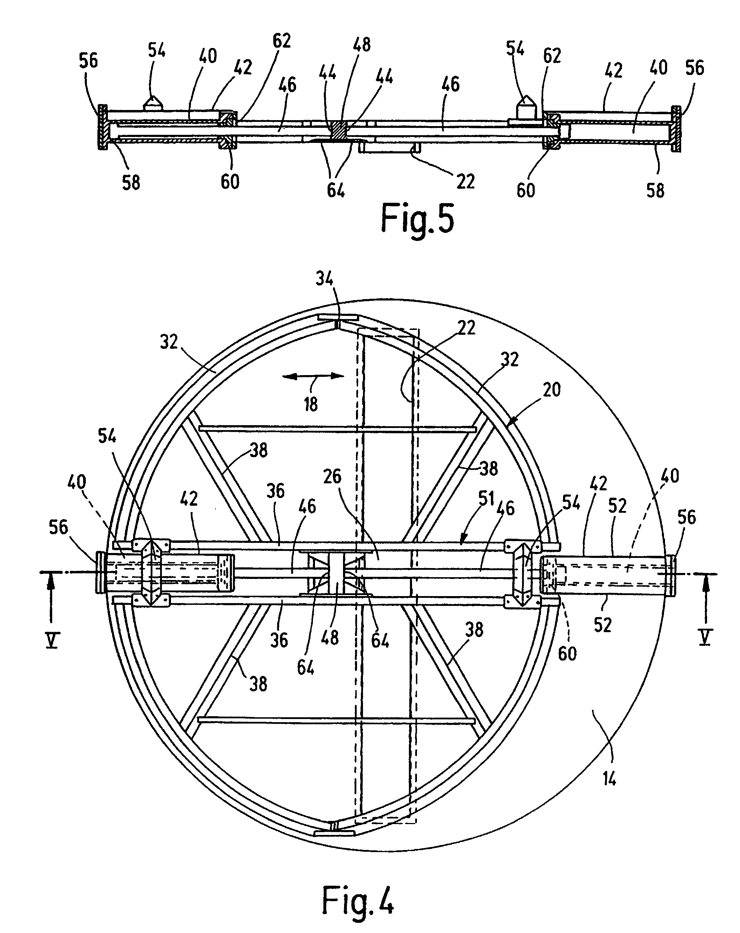

- Fig. 4: eine Draufsicht auf den Siloboden mit Schubrahmen;
- Fig. 5: einen Schnitt entlang der Schnittlinie V-V der Fig. 4;
- Fig. 6: ein Hydraulikschema für die Ansteuerung und Spülung der Antriebszylinder des Schubrahmens.

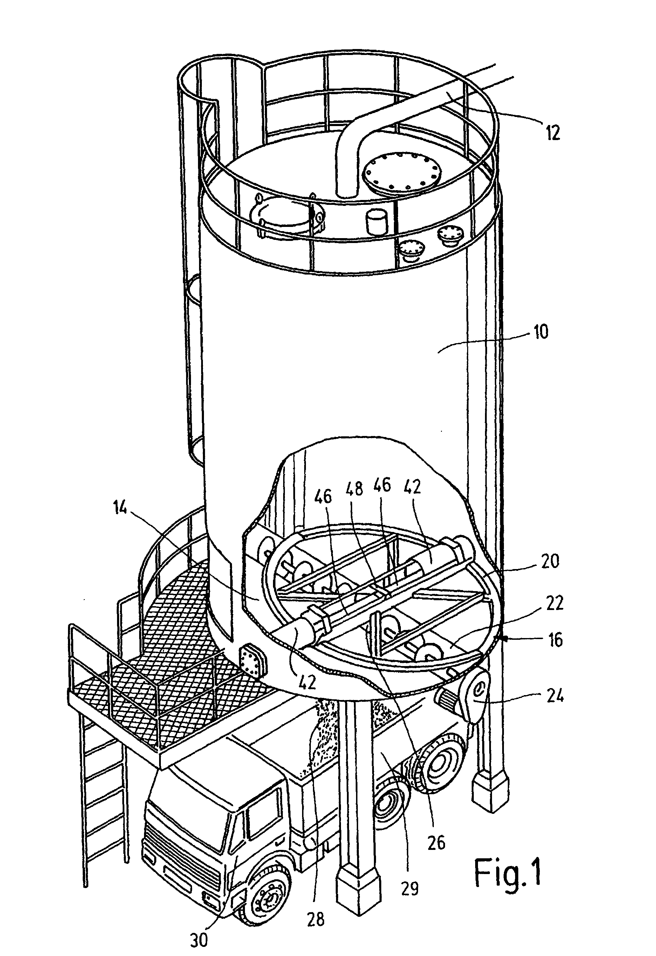

Die in Fig. 1 gezeigte Siloanlage besteht im wesentlichen aus einem zylindrischen Silo 10, der von oben her über das Beschickungsrohr 12 mit Schüttgut beschickbar ist und der im Bereich des Silobodens 14 eine Vorrichtung 16 für den Materialaustrag aufweist. Die Austragvorrichtung umfaßt einen auf dem Siloboden 14 in Richtung des Doppelpfeils 18 hin- und herverschiebbaren Schubrahmen 20 sowie einen unterhalb des Schubrahmens 20 in einer langgestreckten Austragrinne 22 des Silobodens 14 angeordneten, als Schneckenförderer ausgebildeten Austragförderer 24. Der Austragförderer mündet bei dem gezeigten Ausführungsbeispiel in eine mittig unter dem Siloboden 14 angeordnete Auslaßöffnung 26, über die das Schüttgut 28 in eine unter dem Silo befindliche Aufnahme (Ladefläche 29 eines LKW 30) ausgetragen werden kann. Alternativ kann unterhalb der Auslaßöffnung 26 direkt ein Trichter für eine Pumpenbeschickung angeordnet sein. Der Schubrahmen 20 weist zwei zueinander spiegelbildlich angeordnete, teilkreisförmige Rahmenholme 32 auf, die an ihrer Stoßstelle 34 einen stumpfen Winkel miteinander einschließen und die durch zwei im Abstand voneinander angeordnete Traversen 36 und mehrere Streben 38 unter Aussteifung des Schubrahmens miteinander verbunden sind.

Der Antrieb des Schubrahmens 20 erfolgt über zwei einander diametral innerhalb des Silos gegenüberliegende, radial ausgerichtete Hydrozylinder 40, die in je einem mit dem Siloboden 14 verbundenen Zylindergehäuse 42 angeordnet sind und die mit den einander zugewandten Stirnflächen 44 ihrer Kolbenstangen 46 von einander entgegengesetzten Seiten her gegen ein mittig am Schubrahmen 20 angeordnetes Mitnehmerlager 48 radial anliegen. Das Mitnehmerlager 48 erstreckt sich im mittleren Bereich des Schubrahmens 20 zwischen den beiden Quertraversen 36 und ist an diesen mittels Niet- oder Schraubverbindungen 50 starr befestigt.

Die Kolbenstangen 46 treten über je eine am inneren Ende des Hydrozylinders 40 angeordnete Führungsbüchse 60 und eine Gehäuseöffnung 62 radial ins Siloinnere aus und liegen mit ihren als Kugelkalotten ausgebildeten Stirnflächen 44 im Bereich einer konkaven Anlagefläche 64 gegen das Mitnehmerlager 48 an.

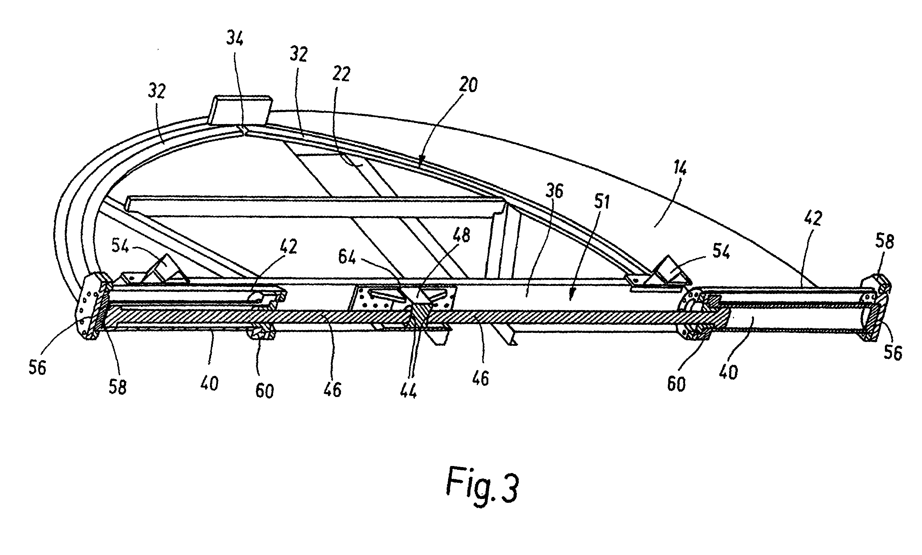

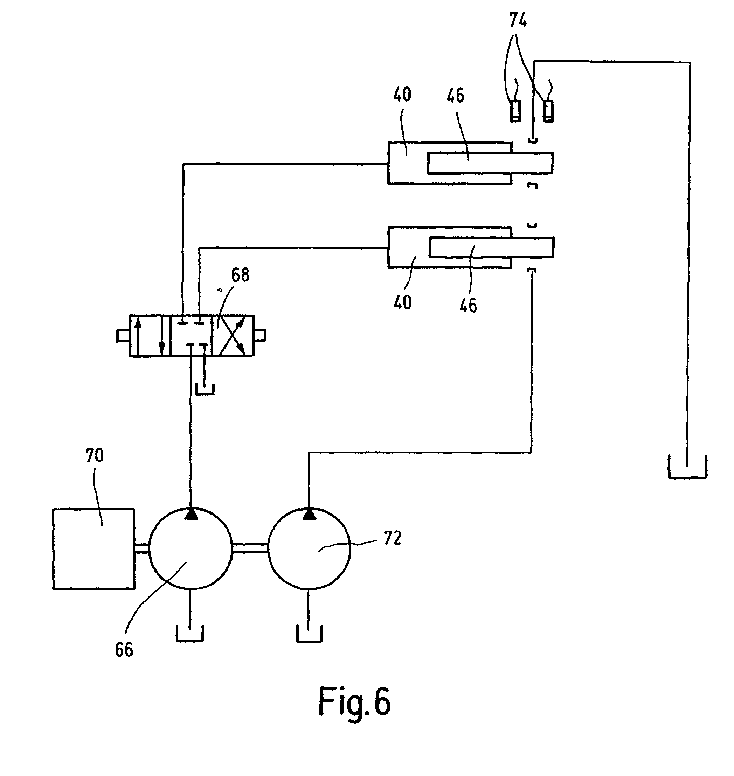

Die Quertraversen 36 begrenzen innerhalb des Schubrahmens 20 einen nach oben und unten offenen Führungsrahmen 51, der an einer durch die Außenflächen der Zylindergehäuse 42 gebildeten Schubführung 52 geführt wird. Auf ihrer dem Siloboden 14 abgewandten Seite sind die Quertraversen 36 durch zwei Bügel 54 miteinander verbunden. Die Zylindergehäuse 42 sind über eine durch einen abnehmbaren Flanschdeckel 56 verschließbare Wartungsöffnung 58 von der Außenseite des Silos 10 her zugänglich. Wie aus Fig. 3 und 5 zu ersehen ist, sind die Zylindergehäuse 42 zusätzlich von der Unterseite des Silobodens 14 aus über eine Bodenöffnung zu Montageund Wartungszwecken zugänglich.

Bei jeder Verschiebebewegung des Schubrahmens 20 in der einen oder anderen Richtung wird bodennah angeordnetes Material von den Rahmenholmen 32 und den Streben 38 zur Austragrinne 22 geschoben und von dort über den Austragförderer 24 aus dem Silo ausgetragen. Die dachförmigen Profile der Rahmenholme 32 und der Streben 38 sorgen dafür, daß beim Zurückschieben des Schubrahmens 20 das außerhalb des Schubrahmens 20 befindliche Material in das Innere des Schubrahmens 20 gelangen und bei der anschließenden Gegenbewegung in Richtung Austragrinne 22 verschoben werden kann. Der Krafteintrag erfolgt über die Kolbenstangen 46, die aufgrund der Anordnung der Hydrozylinder 40 im Inneren des Silos relativ kurz ausgebildet sind.

Aus dem in Fig. 6 gezeigten Hydraulikschema ist zu ersehen, daß die Hydrozylinder 40 über die Hydraulikpumpe 66 und das Wegeventil 68 im Gegentakt mit Druckflüssigkeit beaufschlagt werden. Als Druckflüssigkeit wird zweckmäßig Wasser verwendet. Die Umsteuerung des Wegeventils 68 erfolgt über die durch die Kolbenstangen 46 in ihren Endstellungen betätigten Endschalter 74. Bei dem in Fig. 6 gezeigten Ausführungsbeispiel treibt der Pumpenmotor 70 zusätzlich eine Spülpumpe 72 an, über die die Führungsbüchsen 60 mit Spülwasser zur Reinigung der Kolbenstangen 46 beaufschlagt werden.

## Patentansprüche

1. Vorrichtung für den Materialaustrag aus einem Silo (10) mit einer sich mittig über den Siloboden (14) erstreckenden, langgestreckten Austragöffnung oder -rinne (22), und mit einem auf dem Siloboden (14) über der Austragöffnung oder -rinne (22) quer zu deren Längserstreckung mittels mindestens eines radial ausgerichteten Hydrolzylinders (40) hin- und herverschiebbaren Schubrahmen (20), wobei der Hydrozylinder mit der Stirnfläche (44) seiner über eine radial nach innen weisende Gehäuseöffnung (62) überstehenden Kolbenstange (46) an einem am Schubrahmen (20) angeordneten Mitnehmerlager (48) angeschlossen ist, **dadurch gekennzeichnet, daß** der mindestens eine Hydrozylinder (40) im Inneren des Silos in einem mit dem Siloboden (14) verbundenen Zylindergehäuse (42) angeordnet ist.

2. Vorrichtung nach Anspruch 1, **gekennzeichnet durch** zwei im Inneren des Silos (10) einander diametral gegenüberliegende, radial ausgerichtete, im Gegentakt ansteuerbare Hydrozylinder (40), die in je einem mit dem Siloboden (14) verbundenen Zylindergehäuse (42) angeordnet sind und die mit den einander zugewandten Stirnflächen (44) ihrer über je eine radial nach innen weisende Gehäuseöffnung (62) überstehenden Kolbenstangen (46) oder Plunger von einander entgegengesetzten Seiten her gegen ein mittig am Schubrahmen (20) angeordnetes Mitnehmerlager (48) radial anliegen.

3. Vorrichtung nach Anspruch 2, **dadurch gekennzeichnet, daß** die beiden Zylindergehäuse (42) an ihrer Außenfläche eine Schubführung (52) für den Schubrahmen (20) bilden.

4. Vorrichtung nach Anspruch 2 oder 3, **dadurch gekennzeichnet, daß** die Zylindergehäuse (42) jeweils bis zum äußeren Rand des Silobodens (14) reichen und vom Siloäußeren her über eine mittels eines Deckels (56) verschließbare Radialöffnung (58) zugänglich sind.

5. Vorrichtung nach einem der Ansprüche 2 bis 4, **dadurch gekennzeichnet, daß** die Zylindergehäuse (42) zu einer im Siloboden (14) angeordneten, vorzugsweise mittels eines Bodendeckels verschließbaren Montageöffnung hin offen sind.

6. Vorrichtung nach einem der Ansprüche 2 bis 5, **dadurch gekennzeichnet, daß** die Zylindergehäuse (42) ausgehend vom Bodenrand sich über jeweils ein Viertel des Bodendurchmessers erstrecken.

7. Vorrichtung nach einem der Ansprüche 1 bis 6, **dadurch gekennzeichnet, daß** der Siloboden (14) einen kreisrunden Umriß aufweist, und daß der Schubrahmen aus zwei zueinander spiegelbildlich angeordneten, teilkreisförmigen Rahmensegmenten (32) zusammengesetzt ist.

8. Vorrichtung nach Anspruch 7, **dadurch gekennzeichnet, daß** die Rahmensegmente (32) an ihren einander zugewandten, miteinander verbundenen Stoßstellen (34) einen stumpfen Winkel einschließen.

9. Vorrichtung nach einem der Ansprüche 3 bis 8, **dadurch gekennzeichnet, daß** der Schubrahmen (20) zwei im Abstand voneinander angeordnete, in Verschieberichtung (18) des Schubrahmens ausgerichtete, gegen die Schubführung (52) auf den Gehäuseaußenseiten gleitend anliegende Traversen (36) aufweist.

10. Vorrichtung nach Anspruch 9, **dadurch gekennzeichnet, daß** das Mitnehmerlager (48) sich im mittleren Bereich des Schubrahmens (20) zwischen den beiden Traversen (36) erstreckt.

11. Vorrichtung nach Anspruch 9 oder 10, **dadurch gekennzeichnet, daß** die Traversen (36) einen in Verschieberichtung (18) langgestreckten, nach oben und unten offenen Führungsrahmen (51) innerhalb des Schubrahmens (20) begrenzen.

12. Vorrichtung nach einem der Ansprüche 9 bis 11, **dadurch gekennzeichnet, daß** die Traversen (36) in der Nähe ihrer Enden auf ihrer dem Siloboden (14) abgewandten Seite durch je einen Bügel (54) miteinander verbunden sind.

13. Vorrichtung nach einem der Ansprüche 2 bis 12, **dadurch gekennzeichnet, daß** die Hydrozylinder (40) als Plungerzylinder ausgebildet sind, deren Plunger mit ihren freien Stirnflächen gegen das Mitnehmerlager (48) anliegen.

14. Vorrichtung nach einem der Ansprüche 2 bis 13, **dadurch gekennzeichnet, daß** die Kolbenstangen (46) oder Plunger im Bereich einer radial nach innen weisenden Führungsbüchse (60) am inneren Ende ihrer Hydrozylinder (40) mit einer Spülflüssigkeit, vorzugsweise mit Wasser, beaufschlagt sind.

15. Vorrichtung nach einem der Ansprüche 2 bis 14, **dadurch gekennzeichnet, daß** die Kolbenstangen (46) oder Plunger an ihren Stirnflächen als konvexe Kugel- oder Zylinderkalotten ausgebildet sind und daß das Mitnehmerlager je eine den Kugel- oder Zylinderkalotten entsprechende konkave Lagerfläche (64) aufweist.

16. Vorrichtung nach einem der Ansprüche 2 bis 15, **dadurch gekennzeichnet, daß** die Hydrozylinder (40) mit Wasser als hydraulischem Druckmittel beaufschlagbar sind.

17. Vorrichtung nach Anspruch 1, **dadurch gekennzeichnet, daß** ein einziger, als Differentialzylinder ausgebildeter Hydrozylinder vorgesehen ist.

18. Vorrichtung nach einem der Ansprüche 1 bis 17, **dadurch gekennzeichnet, daß** der Schubrahmen Rahmenholme (32) und/oder Rahmenstreben (38) aufweist, die an ihrer vom Siloboden abgewandten Seite ein dachförmiges Profil aufweisen.

19. Vorrichtung nach einem der Ansprüche 1 bis 18, **dadurch gekennzeichnet, daß** die Austragöffnung in einen, vorzugsweise als Schnekkenförderer ausgebildeter Austragförderer (24) mündet.

20. Vorrichtung nach einem der Ansprüche 1 bis 19, **dadurch gekennzeichnet, daß** in der Austragrinne (22) ein vorzugsweise als Schnekkenförderer ausgebildeter Austragförderer (24) angeordnet ist.

21. Vorrichtung nach einem der Ansprüche 1 bis 20, **dadurch gekennzeichnet, daß** in der Austragrinne (22) eine mittige Auslaßöffnung (26) angeordnet ist.

## Claims

1. Device for discharging material from a silo (10) comprising a long discharge channel (22) extending centrally over the silo floor (14) and a push-frame (20) which can be pushed back and forth over the silo floor (14) over the discharge channel (22) by means of at least one radially aligned hydraulic cylinder (40), wherein the hydraulic cylinder is connected with the end surface (44) of its piston rod (46), which projects beyond a radially inwardly directed housing opening (62), to a driver bearing (48) located on the push-frame (20), **characterized in that** the at least one hydraulic cylinder (40) is disposed on the inside of the silo in a cylinder housing (42) which is connected with the silo floor (14).

2. Device according to claim 1, **characterized by** two radially arranged hydraulic cylinders (40), which face each other diametrically opposed inside the silo (10), which are controlled to operate in push-pull manner, each of which respectively being situated in cylinder housings (42) connected to the silo floor (14), and which with the opposing faces (44) of piston rods (46) or plungers projecting radially inwards from respective opposite housing openings (62) lie against a driver bearing (48) located centrally in the push-frame (20).

3. Device according to claim 2, **characterized in that** the two cylinders housings (42) form on their outer surfaces a thrust guide (52) for the push-frame (20).

4. Device according to claim 2 or 3, **characterized in that** the cylinder housings (42) respectively extend to the outer edge of the silo floor (14) and are accessible from the outside of the silo via a radial opening (58) which is closable by a lid (56).

5. Device according to one of claims 2 through 4, **characterized in that** the cylinder housings (42) are open to an access opening in the silo floor (14), preferably closed by a closable floor plate.

6. Device according to one of claims 2 through 5, **characterized in that** the cylinder housings (42) extend beginning from the edge of the floor respectively over one quarter of the floor diameter.

7. Device according to one of claims 1 through 6, **characterized in that** the silo floor (14) exhibits a circular circumference, and that the push-frame is formed of two arc shaped frame segments (32) arranged in a mirror image.

8. Device according to claim 7, **characterized in that** the frame segments (32) form an acute angle at their facing, interconnected contacting points (34).

9. Device according to one of claims 3 through 8, **characterized in that** the push-frame (20) comprises two traverses (36) which are spaced apart, oriented in the direction of displacement (18) of the push-frame, and lie slidably against the thrust guide (52) on the cylinder housing outer side.

10. Device according to claim 9, **characterized in that** the driver bearing (48) is extends between the two traverses (36) in a central area of the push-frame (20).

11. Device according to one of claims 9 or 10, **characterized in that** the traverses (36) delimit a guide frame (51) which extends longitudinally within the push-frame (20) in the direction of the displacement movement (18) and which is open in upwardly and downwardly directions.

12. Device according to one of claims 9 through 11, **characterized in that** the traverses (36) in the area of their ends are connected to each other by a cross piece (54) at their side opposing the silo floor (14).

13. Device according to one of claims 2 through 12, **characterized in that** the hydraulic cylinders (40) are formed as a plunger cylinders, the plungers of which lie with their free end surfaces against the driver bearing (48).

14. Device according to one of claims 2 through 13, **characterized in that** the piston rods (46) or plungers are subjected to a rinsing liquid, preferably water, in the region of a radially inward directed guide bushing (60) at the inner end of their hydraulic cylinders (40).

15. Device according to one of claims 2 through 14, **characterized in that** the piston rods (46) or plungers on their end surfaces are formed as convex spherical or cylindrical domes and that the driver bearings respectively exhibit a concave bearing surface (64) corresponding to the spherical or cylindrical dome.

16. Device according to one of claims 2 through 15, **characterized in that** the hydraulic cylinders (40) are acted upon by water as the hydraulic pressure means.

17. Device according to claim 1, **characterized in that** a single hydraulic cylinder is provided which is formed to be a differential cylinder.

18. Device according to one of claims 1 through 17, **characterized in that** the push-frame includes outer frames (32) and/or frames struts (38), which exhibit on their side opposing the silo floor a roof-shaped profile.

19. Device according to one of claims 1 through 18, **characterized in that** the outlet opening opens into a outlet conveyor (24) preferably formed as a screw conveyor.

20. Device according to one of claims 1 through 19, **characterized in that** a discharge conveyor (24) is provided in the outlet channel (22), which is preferably formed as a screw conveyor.

21. Device according to one of claims 1 through 20, **characterized in that** a centrally located outlet opening (26) is provided in the discharge channel (22).

## Revendications

1. Dispositif pour évacuer des matériaux d'un silo (10), avec une ouverture ou goulotte d'évacuation oblongue (22), s'étendant centralement sur le fond de silo (14), et avec un bâti pousseur (20) qui peut être déplacé en va-et-vient sur le fond de silo (14) au-dessus de l'ouverture ou goulotte d'évacuation (22), transversalement au développement longitudinal de celle-ci, au moyen d'au moins un cylindre hydraulique (40) orienté radialement, le cylindre hydraulique étant raccordé, par la face frontale (44) de sa tige de piston (46) dépassant d'une ouverture de boîtier (62) dirigée radialement vers l'intérieur, à un palier entraîneur (48) disposé sur le bâti pousseur (20), **caractérisé en ce que** le cylindre hydraulique (40) au moins unique est disposé à l'intérieur du silo dans un boîtier cylindrique (42) assemblé au fond de silo (14).

2. Dispositif selon la revendication 1, **caractérisé par** deux cylindres hydrauliques (40) orientés radialement, diamétralement opposés à l'intérieur du silo (10), qui peuvent être asservis en exploitation symétrique, sont disposés chacun dans un boîtier cylindrique (42) assemblé au fond de silo (14) et s'appliquent radialement depuis des côtés mutuellement opposés, par les faces frontales en vis-à-vis (44) de leurs tiges de piston (46) ou plongeurs dépassant respectivement d'une ouverture de boîtier (62) dirigée radialement vers l'intérieur, contre un palier entraîneur (48) disposé centralement sur le bâti pousseur (20).

3. Dispositif selon la revendication 2, **caractérisé en ce que** les deux boîtiers cylindriques (42) forment sur leur face extérieure un guide de poussée (52) pour le bâti pousseur (20).

4. Dispositif selon la revendication 2 ou 3, **caractérisé en ce que** les boîtiers cylindriques (42) s'étendent respectivement jusqu'au bord extérieur du fond de silo (14) et sont accessibles depuis l'extérieur du silo par une ouverture radiale (58) pouvant être fermée au moyen d'un couvercle (56).

5. Dispositif selon l'une quelconque des revendications 2 à 4, **caractérisé en ce que** les boîtiers cylindriques (42) sont ouverts vers une ouverture de montage disposée dans le fond de silo (14) et pouvant être de préférence fermée au moyen d'un couvercle de fond.

6. Dispositif selon l'une quelconque des revendications 2 à 5, **caractérisé en ce que** les boîtiers cylindriques (42) s'étendent respectivement, à partir du bord du fond, sur un quart du diamètre du fond.

7. Dispositif selon l'une quelconque des revendications 1 à 6, **caractérisé en ce que** le fond de silo (14) présente un contour circulaire, et **en ce que** le bâti pousseur est composé de deux segments de bâti (32) en forme de cercles partiels, disposés symétriquement l'un par rapport à l'autre.

8. Dispositif selon la revendication 7, **caractérisé en ce que** les segments de bâti (32) forment entre eux un angle obtus à leurs points de joint (34) en vis-à-vis, mutuellement assemblés.

9. Dispositif selon l'une quelconque des revendications 3 à 8, **caractérisé en ce que** le bâti pousseur (20) présente deux traverses (36) disposées à distance l'une de l'autre, orientées dans la direction de déplacement (18) du bâti pousseur et s'appliquant en glissement contre le guide de poussée (52) sur le côté extérieur des boîtiers.

10. Dispositif selon la revendication 9, **caractérisé en ce que** le palier entraîneur (48) s'étend dans la région centrale du bâti pousseur (20) entre les deux traverses (36).

11. Dispositif selon la revendication 9 ou 10, **caractérisé en ce que** les traverses (36) délimitent à l'intérieur du bâti pousseur (20) un bâti de guidage (51) s'étendant longitudinalement dans la direction de déplacement (18) et ouvert vers le haut et vers le bas.

12. Dispositif selon l'une quelconque des revendications 9 à 11, **caractérisé en ce que** les traverses (36) sont, à proximité de leurs extrémités, sur leur côté opposé au fond de silo (14), mutuellement assemblées par un étrier respectif (54).

13. Dispositif selon l'une quelconque des revendications 2 à 12, **caractérisé en ce que** les cylindres hydrauliques (40) sont réalisés sous forme de cylindres plongeurs, dont les plongeurs s'appliquent par leurs faces frontales libres contre le palier entraîneur (48).

14. Dispositif selon l'une quelconque des revendications 2 à 13, **caractérisé en ce que** les tiges de piston (46) ou plongeurs sont sollicités par un liquide de rinçage, de préférence par de l'eau, dans la région d'une douille de guidage (60) dirigée radialement vers l'intérieur, à l'extrémité intérieure de leurs cylindres hydrauliques (40).

15. Dispositif selon l'une quelconque des revendications 2 à 14, **caractérisé en ce que** les tiges de piston (46) ou plongeurs sont réalisés sur leurs faces frontales sous forme de calottes cylindriques ou sphériques convexes, et **en ce que** le palier entraîneur présente une face de palier concave respective (64) correspondant aux calottes cylindriques ou sphériques.

16. Dispositif selon l'une quelconque des revendications 2 à 15, **caractérisé en ce que** les cylindres hydrauliques (40) peuvent être sollicités par de l'eau comme fluide hydraulique.

17. Dispositif selon la revendication 1, **caractérisé en ce qu'**il est prévu un seul cylindre hydraulique, réalisé sous forme de cylindre différentiel.

18. Dispositif selon l'une quelconque des revendications 1 à 17, **caractérisé en ce que** le bâti pousseur comporte des montants de bâti (32) et/ou des entretoises de bâti (38) qui présentent un profil en toit sur leur côté opposé au fond de silo.

19. Dispositif selon l'une quelconque des revendications 1 à 18, **caractérisé en ce que** l'ouverture d'évacuation débouche dans un convoyeur d'évacuation (24), réalisé de préférence sous forme de convoyeur à vis.

20. Dispositif selon l'une quelconque des revendications 1 à 19, **caractérisé en ce qu'**un convoyeur d'évacuation (24), réalisé de préférence sous forme de convoyeur à vis, est disposé dans la goulotte d'évacuation (22).

21. Dispositif selon l'une quelconque des revendications 1 à 20, **caractérisé en ce qu'**une ouverture de sortie centrale (26) est disposée dans la goulotte d'évacuation (22).
